# EUROPÄISCHE PATENTANMELDUNG

(11) **EP 3 967 128 A1**
(43) Veröffentlichungstag der Anmeldung: **16.03.2022**
(21) Anmeldenummer: 21189038.9
(22) Anmeldetag: 02.08.2021
(51) Int. Cl.: A01D 43/10, A01D 43/08

(54) **FELDHÄCKSLER**

(30) Priorität: 09.09.2020 DE 102020123526
(71) Anmelder: CLAAS Selbstfahrende Erntemaschinen GmbH, 33428 Harsewinkel (DE)
(72) Erfinder: Heitmann, Christoph, 48231 Warendorf (DE); Belau, Sven Carsten, 33332 Gütersloh (DE); Bönig, Ingo, 33330 Gütersloh (DE); Meyer zu Hörste, Jan, 49214 Bad Rothenfelde (DE)
(74) Vertreter: CLAAS Gruppe

(57) **Zusammenfassung**

Die Erfindung betrifft einen Feldhäcksler mit mindestens einem Arbeitsaggregat (2), wobei der Feldhäcksler (1) als Arbeitsaggregat (2) einen Corncracker (5) zum Aufbereiten der Kornbestandteile aufweist, wobei der Feldhäcksler (1) ein Fahrerassistenzsystem (8) aufweist. Es wird vorgeschlagen, dass das Fahrerassistenzsystem (8) mindestens den Corncracker (5) in einer Steuerroutine steuert, indem das Fahrerassistenzsystem (8) die Maschinenparameter des Corncrackers (5) einstellt, dass das Fahrerassistenzsystem (8) ein Optimierungsmodell (10) aufweist, dass das Optimierungsmodell (10) mindestens ein mehrdimensionales Kennlinienfeld (11) aufweist, das eine Beziehung zwischen einer Aufbereitungsqualität der Kornbestandteile und mindestens drei Parametern abbildet, die mindestens drei Parameter umfassend mindestens einen einen aktuellen Ernteprozesszustand abbildenden Eingangsparameter und mindestens einen Maschinenparameter des Corncrackers (5) als Ausgangsparameter, dass das Fahrerassistenzsystem (8) in der Steuerroutine während des Ernteprozesses auf Basis des variierenden Eingangsparameters aus dem Optimierungsmodell (10) den Ausgangsparameter ermittelt und am Corncracker (5) einstellt, um eine gleichmäßige, vorgegebene Aufbereitungsqualität der Kornbestandteile während des Ernteprozesses zu erreichen.

## Beschreibung

Die Erfindung betrifft einen Feldhäcksler zur Durchführung eines Ernteprozesses gemäß dem Oberbegriff von Anspruch 1 sowie ein Verfahren zur Steuerung eines Feldhäckslers gemäß Anspruch 15.

Feldhäcksler ernten einen Feldbestand von einem Feld ab und verarbeiten das so gewonnene Erntegut mittels einer Reihe von Arbeitsaggregaten. Ein primäres und vorliegend besonders interessantes Einsatzgebiet von Feldhäckslern ist die Ernte von Mais. Bei dieser Ernte wird häufig mittels des Feldhäckslers die gesamte Maispflanze inklusive der Maiskolben aufgenommen und gehäckselt. Das so gewonnene Erntegut wird insbesondere zur Fütterung von Nutztieren, vor allem Wiederkäuern, verwendet. Eine alternative Verwendungsmöglichkeit ist die Nutzung in Biogasanlagen.

Besonders bei der Verwendung des Ernteguts als Futtermittel für Tiere und bei der Verwendung in Biogasanlagen ist wichtig, dass die Kornbestandteile des Ernteguts aufgeschlossen, also zerkleinert, werden. Wichtig ist das Aufschließen der Kornbestandteile, damit die darin enthaltene Stärke zugänglich wird und nicht durch die Hülle des Kornbestandteils geschützt wird. Das Aufschließen der Kornbestandteile geschieht einerseits durch das Häckseln des Ernteguts und andererseits wesentlich durch einen Corncracker des Feldhäckslers. Dieser Corncracker kann zwar so eingestellt werden, dass mit Sicherheit alle Kornbestandteile zerkleinert sind, eine derartige Einstellung verbraucht jedoch unnötig viel Energie bzw. Kraftstoff. Diese unnötig hohe verbrauchte Energie kann damit nicht in eine Steigerung der Fahrgeschwindigkeit umgesetzt werden, so dass sich systemimmanent eine entsprechend geminderte Flächenleistung ergibt.

Der bekannte Feldhäcksler (EP 2 361 495 A1), von dem die Erfindung ausgeht, weist mindestens ein Arbeitsaggregat auf, das mit Maschinenparametern einstellbar ist. Der Feldhäcksler weist als Arbeitsaggregat einen Corncracker auf, der zwei Walzen aufweist, die im Betrieb jeweils mit einer als Maschinenparameter einstellbaren Drehzahl rotieren, wobei zwischen den Walzen ein Spalt mit einer als Maschinenparameter einstellbaren Spaltbreite verbleibt und wobei die Walzen eine als Maschinenparameter einstellbare Differenzdrehzahl aufweisen. Ein Benutzer kann hier eine gewünschte Aufbereitungsqualität der Kornbestandteile vorgeben. Um diese zu erreichen, stellt ein Fahrerassistenzsystem des Feldhäckslers die Spaltbreite des Corncrackers entsprechend ein. Diese Einstellung der Spaltbreite erfolgt basierend auf einer Häcksellänge. Die basierend auf der Häcksellänge eingestellte Spaltbreite wird anschließend abhängig von der Feuchtigkeit des Ernteguts korrigiert. Eine derartige sequentielle Berücksichtigung von Häcksellänge und Feuchtigkeit zur Einstellung der Spaltbreite funktioniert, wenn lediglich die Häcksellänge, die Feuchtigkeit und die Spaltbreite betrachtet werden. Werden jedoch weitere Parameter, die während eines Ernteprozesses variieren, und weitere Stellgrößen in Form von Maschinenparametern berücksichtigt, stößt die sequentielle Einstellung an ihre Grenzen. Um diese Grenzen zu umgehen, nutzt der bekannte Feldhäcksler eine optische Erkennung der Aufbereitungsqualität der Körner und regelt dann die Spaltbreite entsprechend nach. Diese optische Erkennung ist jedoch teuer und aufwändig.

Der Erfindung liegt das Problem zugrunde, den bekannten Feldhäcksler derart auszugestalten und weiterzubilden, dass die Aufbereitungsqualität der Kornbestandteile effektiver und präziser einstellbar wird.

Das obige Problem wird bei einem Feldhäcksler gemäß dem Oberbegriff von Anspruch 1 durch die Merkmale des kennzeichnenden Teils von Anspruch 1 gelöst.

Wesentlich ist die grundsätzliche Überlegung, den Corncracker mittels eines Optimierungsmodells basierend auf einem mehrdimensionalen Kennlinienfeld zu steuern. Der Begriff "mehrdimensional" bedeutet hier, dass mindestens drei Parameter gemeinsam betrachtet werden.

Während bei der Einstellung der Spaltbreite basierend auf der Häcksellänge und der Erntegutfeuchtigkeit ein sequentielles Nachkorrigieren auf Basis der Erntegutfeuchtigkeit noch zu guten Ergebnissen führen kann, werden die Vorteile der mehrdimensionalen Kennlinienfeldsteuerung bei mehr Parametern offensichtlich. Dadurch, dass nicht erst ein Parameter und dann der nächste und so weiter betrachtet wird, können die Interdependenzen der Parameter bei der Steuerung berücksichtigt werden, sodass ein globales Optimum gefunden werden kann.

Im Einzelnen wird vorgeschlagen, dass das Fahrerassistenzsystem mindestens den Corncracker in einer Steuerroutine steuert, indem das Fahrerassistenzsystem die Maschinenparameter des Corncrackers einstellt, dass das Fahrerassistenzsystem ein Optimierungsmodell aufweist, dass das Optimierungsmodell mindestens ein mehrdimensionales Kennlinienfeld aufweist, das eine Beziehung zwischen einer Aufbereitungsqualität der Kornbestandteile und mindestens drei Parametern abbildet, die mindestens drei Parameter umfassend mindestens einen einen aktuellen Ernteprozesszustand abbildenden Eingangsparameter und mindestens einen Maschinenparameter des Corncrackers als Ausgangsparameter, dass der mindestens eine Eingangsparameter während des Ernteprozesses variiert und dass das Fahrerassistenzsystem in der Steuerroutine während des Ernteprozesses auf Basis des variierenden Eingangsparameters aus dem Optimierungsmodell den Ausgangsparameter ermittelt und am Corncracker einstellt, um eine gleichmäßige, vorgegebene Aufbereitungsqualität der Kornbestandteile während des Ernteprozesses zu erreichen.

Ein weiterer Vorteil der vorschlagsgemäßen Lehre ist somit, dass eine gleichmäßige Aufbereitungsqualität während des Ernteprozesses auch bei variierenden Randbedingungen gewährleistet werden kann. Diese variierenden Randbedingungen können durch das Feld, den Feldbestand oder Handlungen eines Benutzers bedingt sein. Letztere liegen darin begründet, dass der Benutzer neben der Aufbereitungsqualität bei einem Feldhäcksler auf viele weitere Parameter und Randbedingungen achten muss und nicht all seine Handlungen auf den Corncracker ausrichten kann.

Die Vorteile der vorschlagsgemäßen Lehre zeigen sich in besonderer Art und Weise, wenn, wie in einigen Ausgestaltungen gemäß Anspruch 2, mehr als drei Parameter von dem mehrdimensionalen Kennlinienfeld abgebildet werden.

Bevorzugt bei dem Feldhäcksler vorhandene Arbeitsaggregate, die insbesondere mit Maschinenparametern einstellbar sind, sind Gegenstand von Anspruch 3. Anspruch 4 betrifft vorliegend besonders relevante Eingangsparameter. Anspruch 5 betrifft vorliegend besonders relevante Ausgangsparameter. Gerade durch die Kombination mehrerer dieser Eingangs- und Ausgangsparameter lassen sich die Vorteile der mehrdimensionalen Kennlinienfeldsteuerung in einer besonders interessanten Ausgestaltung abbilden.

Das Erreichen einer konstanten Aufbereitungsqualität ist Gegenstand der bevorzugten Ausgestaltung gemäß Anspruch 6. Die Aufbereitungsqualität wird aktiv erhöht oder eben auch reduziert. Insbesondere im letztgenannten Fall kann die frei werdende Energie vorzugsweise genutzt werden, um die Fahrgeschwindigkeit zu erhöhen.

Weitere Vorteile der mehrdimensionalen Kennlinienfeldsteuerung lassen sich erzielen, wenn das mehrdimensionale Kennlinienfeld auch andere Aspekte wie eine Fahrgeschwindigkeit des Feldhäckslers und/oder eine Flächenleistung des Feldhäckslers und/oder einen Energieverbrauch des Feldhäckslers berücksichtigt. Diese Ausgestaltung ist Gegenstand von Anspruch 7. Gemäß Anspruch 8 kann hinsichtlich der vorgegebenen Aufbereitungsqualität einerseits und dem minimalen Energieverbrauch und/oder der maximalen Fahrgeschwindigkeit und/oder der maximalen Flächenleistung andererseits eine Mehrzieloptimierung durchgeführt werden. Dabei kann gemäß Anspruch 9 vorgesehen sein, dass eine Gewichtung zwischen den jeweils konkurrierenden Größen insbesondere durch einen Benutzer vorgegeben werden kann. So kann die Entscheidung über die Verwendung der durch das mehrdimensionale Kennlinienfeld gewonnenen Freiheitsgrade in die Hand des Benutzers gegeben werden.

In einer Ausgestaltung gemäß Anspruch 10 schlägt das Fahrerassistenzsystem dem Benutzer basierend auf der Mehrzieloptimierung mögliche Veränderungen der Einstellungen des Feldhäckslers vor. Dies trägt dem Umstand Rechnung, dass durch das mehrdimensionale Kennlinienfeld kleinere Veränderungen der Einstellungen des Feldhäckslers einfach analysiert werden können. Wenn mittels dieser kleinen Änderungen große Verbesserungen erzielbar sind, ist es vorteilhaft, diese dem Benutzer vorzuschlagen.

Bevorzugte Ausgestaltungen des Kennlinienfelds sind Gegenstand von Anspruch 11.

Die Ansprüche 12 und 13 betreffen die Möglichkeit, das Kennlinienfeld basierend auf dem aktuellen Ernteprozesszustand anzupassen. Das Kennlinienfeld basiert notwendigerweise auf einigen Annahmen, die bei dem konkreten Ernteprozess nicht immer vollständig zutreffen müssen. Die Möglichkeit, derart Feedback in das Kennlinienfeld zu übertragen, ist gegenüber einer einfachen Regelung vorteilhaft, da derart die theoretisehe Basis hinter Entscheidungsvorgängen verändert wird, anstatt diese nur mit Messwerten, aber immer auf der falschen theoretischen Basis, nachzuführen. Auch ist diese Variante im Vergleich zu einer Regelung weniger schwingungsanfällig.

Bei einer Ausgestaltung gemäß Anspruch 14 führen gewisse Änderungen im Ernteprozess zu neuen Einstellungen am Corncracker.

Nach einer weiteren Lehre gemäß Anspruch 15, der eigenständige Bedeutung zukommt, wird ein Verfahren zur Steuerung eines vorschlagsgemäßen Feldhäckslers beansprucht. Auf alle Ausführungen zu dem vorschlagsgemäßen Feldhäcksler darf verwiesen werden.

Im Folgenden wird die Erfindung anhand einer lediglich ein Ausführungsbeispiel darstellenden Zeichnung näher erläutert. In der Zeichnung zeigt:
- Fig. 1: einen vorschlagsgemäßen Feldhäcksler und
- Fig. 2: eine Benutzeroberfläche zur Eingabe von Benutzervorgaben.

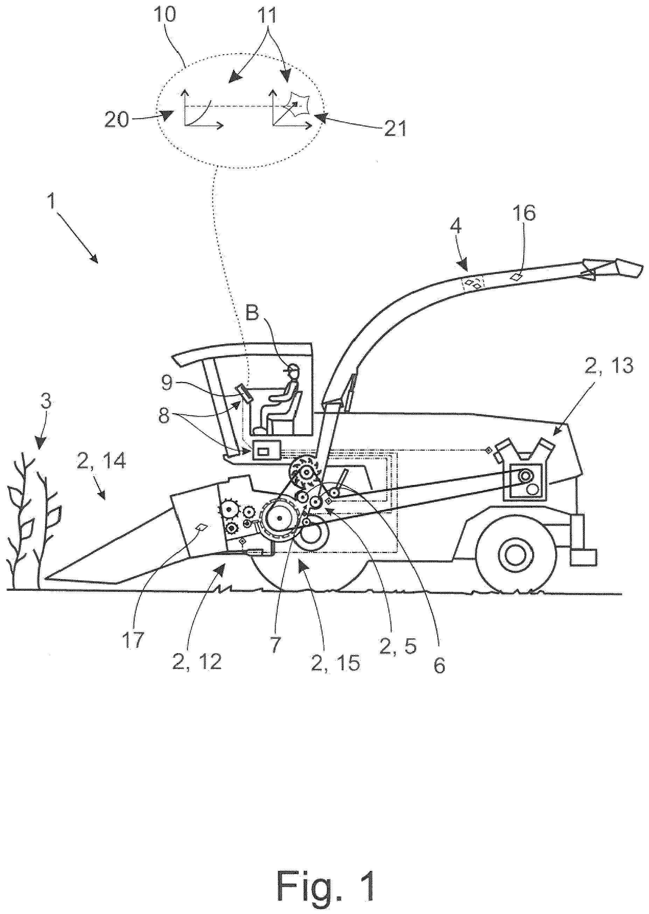

Der in Fig. 1 dargestellte Feldhäcksler 1 dient zur Durchführung eines Ernteprozesses und weist mindestens ein Arbeitsaggregat 2 zum Abernten eines Feldbestandes 3 und/oder zur Verarbeitung von Erntegut 4 des Feldbestandes 3 im Rahmen des Ernteprozesses auf. Hier und vorzugsweise handelt es sich bei dem Feldbestand 3 um Maispflanzen. Grundsätzlich kann vorgesehen sein, dass der Feldhäcksler 1 den Feldbestand 3 aberntet. Alternativ kann der Feldhäcksler 1 jedoch auch bereits abgeernteten Feldbestand 3 lediglich aufnehmen. Das so gewonnene Erntegut 4 wird sodann von dem Feldhäcksler 1 verarbeitet, insbesondere gehäckselt.

Naturgemäß umfasst das Erntegut 4 Kornbestandteile und Nicht-Kornbestandteile. Bei den Kornbestandteilen kann es sich um Maiskörner der Maispflanzen handeln. Die Nicht-Kornbestandteile können dann Blätter, Stängel und dergleichen der Maispflanze sein.

Das mindestens eine Arbeitsaggregat 2 ist mit Maschinenparametern einstellbar. Mittels dieser Einstellung der Maschinenparameter lässt sich in großem Umfang Einfluss auf die Funktion des Arbeitsaggregats 2 nehmen. Bei den Maschinenparametern kann es sich um diverse denkbare funktionale Parameter des Arbeitsaggregats 2 handeln. Die Maschinenparameter können sehr konkret, beispielsweise einen Strom betreffen oder eher abstrakt eine Fahrtroute des Feldhäckslers 1. Der Begriff "Maschinenparameter" ist somit weit zu verstehen.

Der Feldhäcksler 1 weist als Arbeitsaggregat 2 einen Corncracker 5 zum Aufbereiten der Kornbestandteile auf. Im Betrieb zerkleinert der Corncracker 5 das Erntegut 4. Der Corncracker 5 weist zwei Walzen 6 auf, die im Betrieb jeweils mit einer als Maschinenparameter einstellbaren Drehzahl rotieren. Zwischen den Walzen 6 verbleibt ein Spalt 7 mit einer als Maschinenparameter einstellbaren Spaltbreite. Das Erntegut 4 wird im Betrieb des Feldhäckslers 1 durch den Spalt 7 transportiert. Die Walzen 6 weisen eine als Maschinenparameter einstellbare Differenzdrehzahl auf, um die sich die Drehzahl der Walzen 6 unterscheidet. Durch die Differenzdrehzahl der Walzen 6 werden die durch den Spalt 7 zwischen den Walzen 6 hindurchtransportierten Kornbestandteile von den Walzen 6 zerkleinert. Um eine maximale Zerkleinerung und somit eine hohe Aufbereitungsqualität der Kornbestandteile zu erreichen, könnte die Spaltbreite minimal eingestellt werden. Diese Einstellung verbraucht jedoch mehr Energie des Feldhäckslers 1 als nötig, die dann für eine mögliche Steigerung der Fahrgeschwindigkeit fehlt.

Der Feldhäcksler 1 weist ein Fahrerassistenzsystem 8 zum Ansteuern von mindestens einem der Arbeitsaggregate 2 auf. Dieses Fahrerassistenzsystem 8 kann diverse Arbeitsaggregate 2 des Feldhäckslers 1 kontrollieren, mit einem Benutzer B interagieren und ganz allgemein zur Steuerung diverser Aspekte des Feldhäckslers 1 dienen. Zur Kommunikation mit dem Benutzer B weist das Fahrerassistenzsystem 8 ein Terminal 9 auf. Über dieses Terminal 9 kann der Benutzer B dem Fahrerassistenzsystem 8 diverse Benutzervorgaben vorgeben.

Wesentlich ist nun, dass das Fahrerassistenzsystem 8 mindestens den Corncracker 5 in einer Steuerroutine steuert, indem das Fahrerassistenzsystem 8 die Maschinenparameter des Corncrackers 5 einstellt.

Weiter ist wesentlich, dass das Fahrerassistenzsystem 8 ein Optimierungsmodell 10 aufweist. Das Optimierungsmodell 10 weist mindestens ein mehrdimensionales Kennlinienfeld 11 auf, das eine Beziehung zwischen einer Aufbereitungsqualität der Kornbestandteile und mindestens drei Parametern abbildet. Bezüglich der Definition des mehrdimensionalen Kennlinienfelds 11 wird auf den einleitenden Teil der Beschreibung verwiesen.

Die mindestens drei Parameter betreffen den Feldhäcksler 1 und/oder den Ernteprozess, können ansonsten jedoch relativ beliebig gewählt sein, wobei jedoch alle zumindest einen gewissen Einfluss auf die Aufbereitungsqualität der Kornbestandteile haben müssen. Die mindestens drei Parameter umfassen mindestens einen einen aktuellen Ernteprozesszustand abbildenden Eingangsparameter und mindestens einen Maschinenparameter des Corncrackers 5 als Ausgangsparameter. Der dritte Parameter kann dann ein weiterer Eingangsparameter oder ein weiterer Ausgangsparameter sein. Es ist dabei so, dass die Eingangsparameter bezüglich des Optimierungsmodells 10 als gesetzt angesehen werden, während mittels der Ausgangsparameter eine Beeinflussung der Aufbereitungsqualität der Kornbestandteile möglich ist.

Weiter ist wesentlich, dass der mindestens eine Eingangsparameter während des Ernteprozesses variiert und dass das Fahrerassistenzsystem 8 in der Steuerroutine während des Ernteprozesses auf Basis des variierenden Eingangsparameters aus dem Optimierungsmodell 10 den Ausgangsparameter ermittelt und den Ausgangsparameter am Corncracker 5 einstellt, um eine gleichmäßige, vorgegebene Aufbereitungsqualität der Kornbestandteile während des Ernteprozesses zu erreichen. Da diverse Randbedingungen des Ernteprozesses während des Ernteprozesses schwanken können, passt das Fahrerassistenzsystem 8 den Corncracker 5 so an die jeweils aktuellen Bedingungen an.

Es ist hier wesentlich, dass der Begriff "steuern" sich auf ein Steuern im engen Sinne bezieht. Es ist also eine Steuerung und keine Regelung gemeint. Es kann hier sogar so sein, dass die Aufbereitungsqualität der Kornbestandteile nicht sensorisch erfasst wird. Zumindest aber wird nicht auf die Aufbereitungsqualität der Kornbestandteile geregelt. Lediglich eine noch zu erläuternde Veränderung des Kennlinienfeldes 11 erlaubt ein gewisses Feedback in die Steuerung einzubringen.

Der Begriff "Ernteprozesszustand" ist vorliegend weit zu verstehen. Es kann sich dabei auch um interne Zustände des Feldhäckslers 1 während des Ernteprozesses handeln, sofern diese irgendwie die Verarbeitung des Ernteguts 4, dessen Aufnahme oder generell den Ernteprozess betreffen.

Es kann auch vorgesehen sein, dass nicht nur drei Parameter, sondern mindestens vier Parameter, vorzugsweise mindestens fünf Parameter, weiter vorzugsweise mindestens sechs Parameter und noch weiter vorzugsweise mindestens sieben Parameter, im Kennlinienfeld 11 berücksichtigt sind. Alle Ausführungen zu den mindestens drei Parametern gelten für die mindestens vier, mindestens fünf, mindestens sechs oder mindestens sieben Parameter entsprechend.

Hier und vorzugsweise umfassen die mindestens drei Parameter mindestens zwei, vorzugsweise mindestens drei, weiter vorzugsweise mindestens vier, einen aktuellen Ernteprozesszustand abbildende Eingangsparameter. Zusätzlich oder alternativ können die mindestens drei Parameter mindestens zwei, vorzugsweise mindestens drei, Maschinenparameter als Ausgangsparameter umfassen. Die bevorzugten Parameter werden später noch erläutert.

Der in Fig. 1 dargestellte und insoweit bevorzugte Feldhäcksler 1 weist als Arbeitsaggregat 2 Vorpresswalzen 12 mit einer als Maschinenparameter einstellbaren Drehzahl auf. Über diese Drehzahl kann eine Häcksellänge des Ernteguts 4 einstellbar sein. Der Feldhäcksler 1 kann als Arbeitsaggregat 2 zusätzlich oder alternativ einen Motor 13 mit einer als Maschinenparameter einstellbaren Drehzahl zum Antreiben des Feldhäckslers 1 und zur Energieversorgung zumindest eines der weiteren Arbeitsaggregate 2 aufweisen. Weiterhin kann der Feldhäcksler 1 als Arbeitsaggregat 2 ein Vorsatzgerät 14 zum Aufnehmen des Feldbestandes 3 aufweisen. Dieses Aufnehmen kann ein Abernten umfassen. Der Feldhäcksler 1 kann als Arbeitsaggregat 2 auch eine Häckseltrommel 15 zum Häckseln des Ernteguts 4 aufweisen. Da die Häckseltrommel 15 häufig direkt mit dem Motor 13 des Feldhäckslers 1 gekoppelt ist, kann es vorgesehen sein, dass die Häcksellänge im Wesentlichen, ohne Änderung der Motordrehzahl, nur über die Vorpresswalzen 14 einstellbar ist. Andere Anordnungen sind jedoch ebenso möglich. Entsprechend kann auch vorgesehen sein, dass die Häcksellänge nur sekundär über die Vorpresswalzen 14 einstellbar ist.

Der Feldhäcksler 1 kann einen Feuchtesensor 16, insbesondere einen NIR-Sensor, also einen Nahinfrarot-Sensor, zur Bestimmung einer Erntegutfeuchtigkeit aufweisen. Der Feldhäcksler 1 kann auch einen Durchsatzsensor 17 zur Bestimmung eines Erntegutdurchsatzes aufweisen.

Die Eingangsparameter umfassen hier und vorzugsweise Erntegutparameter, insbesondere sensorisch erfasste Erntegutparameter. Bei Erntegutparametern handelt es sich um alle Daten und insbesondere Messdaten, die direkt das Erntegut 4 betreffen. Zusätzlich oder alternativ können die Eingangsparameter die Aufbereitungsqualität beeinflussenden Maschinenparameter umfassen. Dabei handelt es sich um alle Einstellungen an den Arbeitsaggregaten 2 des Feldhäckslers 1, mit denen Einfluss auf die Aufbereitungsqualität ausgeübt wird. Dies kann auch Maschinenparameter umfassen, die von dem Benutzer B nicht direkt einstellbar sind.

Es ist vorzugsweise vorgesehen, dass die Eingangsparameter die Häcksellänge und/oder die Drehzahl der Vorpresswalzen 14 und/oder die Erntegutfeuchtigkeit und/oder die Motordrehzahl und/oder den Erntegutdurchsatz umfassen. Genau diese Eingangsparameter haben einen besonders relevanten Einfluss auf die Aufbereitungsqualität. Sofern nur ein Eingangsparameter vorgesehen ist, ist dieser vorzugsweise aus den genannten gewählt. Grundsätzlich können auch andere Parameter, wie beispielsweise die Drehzahl des Corncrackers 5, als Eingangsparameter Anwendung finden, die hier und vorzugsweise übrigens fest an die Motordrehzahl gekoppelt ist.

Die Ausgangsparameter umfassen vorzugsweise Maschinenparameter des Corncrackers 5 und/oder die Aufbereitungsqualität beeinflussende Maschinenparameter. Vorzugsweise umfassen die Ausgangsparameter die Spaltbreite des Spalts 7 des Corncrackers 5 und/oder die Differenzdrehzahl des Corncrackers 5 und/oder die Drehzahl des Corncrackers 5. Sofern nur ein Ausgangsparameter vorgesehen ist, ist dieser vorzugsweise aus den genannten gewählt.

Es ist ganz allgemein so, dass die vorgegebene Aufbereitungsqualität abhängig von anderen Größen vorgegeben sein kann. Sie kann insbesondere eine minimal zu erreichende Aufbereitungsqualität und eine von wirtschaftlichen Überlegungen abhängige gegebenenfalls gewünschte höhere Aufbereitungsqualität umfassen. Dementsprechend kann vorgesehen sein, dass das mehrdimensionale Kennlinienfeld 11 auch eine Beziehung zwischen einer Fahrgeschwindigkeit des Feldhäckslers 1 und/oder zwischen einer Flächenleistung des Feldhäckslers 1 und/oder zwischen einem Energieverbrauch, insbesondere einem Kraftstoffverbrauch, des Feldhäckslers 1 einerseits und den mindestens drei Parametern andererseits abbildet. Diese Abbildung kann für eine vorzugsweise vorgesehene Mehrzieloptimierung genutzt werden.

Es ist vorzugsweise so, dass das Fahrerassistenzsystem 8 in der Steuerroutine eine Mehrzieloptimierung mit mehreren Zielen auf Basis des Optimierungsmodells 10 durchführt, dass in der Mehrzieloptimierung ein Ziel die vorgegebene Aufbereitungsqualität und ein Ziel ein minimaler Energieverbrauch und/oder eine maximale Fahrgeschwindigkeit und/oder eine maximale Flächenleistung ist und, dass das Fahrerassistenzsystem 8 in der Steuerroutine während des Ernteprozesses auf Basis des variierenden Eingangsparameters den Ausgangsparameter auf Basis der Mehrzieloptimierung optimiert ermittelt. In besonders bevorzugter Ausgestaltung ist in der Mehrzieloptimierung ein Ziel die vorgegebene Aufbereitungsqualität und ein Ziel die maximale Fahrgeschwindigkeit. Zusammengefasst wird es mit der Mehrzieloptimierung möglich, mittels der Ausgangsparameter den Feldhäcksler 1 derart zu steuern, dass einerseits eine vorgegebene Aufbereitungsqualität erreicht wird und andererseits mindestens ein weiteres Ziel, insbesondere eine maximale Fahrgeschwindigkeit, erreicht wird.

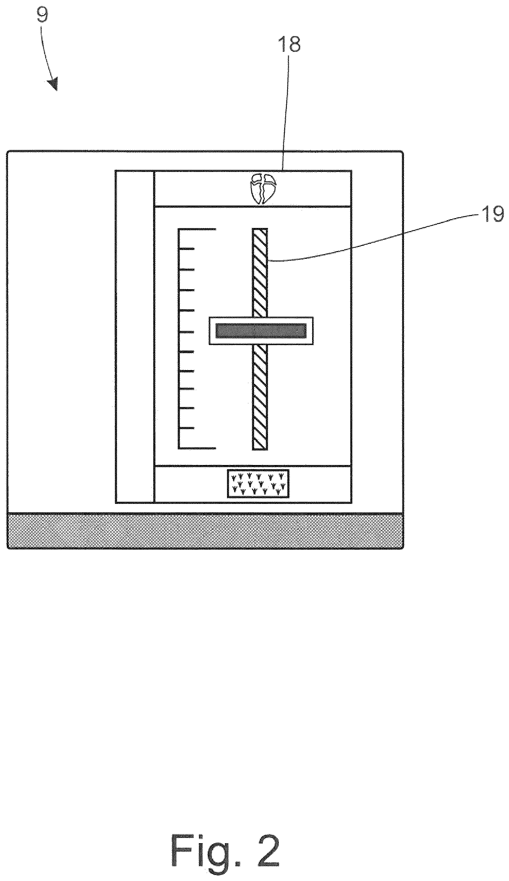

Hier und vorzugsweise ist vorgesehen, dass die Ziele der Mehrzieloptimierung gewichtet sind. Die Gewichtung der Ziele, hier beispielsweise der vorgegebenen Aufbereitungsqualität und des minimalen Energieverbrauchs, können von einem Benutzer B vorgebbar sein. Dabei kann es wie in Fig. 2 dargestellt so sein, dass der Benutzer B die Gewichtung zwischen der Aufbereitungsqualität, in Fig. 2 oben, und dem minimalen Energieverbrauch, in Fig. 2 unten, an einer Grafik 18, insbesondere einem Schieberegler 19, einstellen kann und dass die Grafik 18 eine Konkurrenz zwischen der Aufbereitungsqualität und dem minimalen Energieverbrauch visualisiert. Dabei kann auch zusätzlich vorgesehen sein, dass der Benutzer B weiterhin einen Minimalwert für die Aufbereitungsqualität vorgeben kann.

Es darf darauf hingewiesen werden, dass anstelle des Ziels des minimalen Energieverbrauchs jedwedes andere Ziel vom Benutzer B vorgegeben und ggf. bei der obigen Visualisierung berücksichtigt werden kann. Dies betrifft insbesondere die maximale Fahrgeschwindigkeit, aber auch alle anderen weiter oben genannten Ziele der Mehrzieloptimierung.

Ganz generell gibt der Benutzer B dem Feldhäcksler 1 neben den genannten Benutzervorgaben während der Steuerung des Feldhäckslers 1 noch diverse weitere Benutzervorgaben B vor. Es kann nun vorkommen, dass bereits kleine Änderungen dieser Vorgaben zu einer deutlich höheren Effizienz führen würden. Es ist daher vorzugsweise so, dass das Fahrerassistenzsystem 8 dem Benutzer B basierend auf der Mehrzieloptimierung Vorschläge für die vorgegebene Aufbereitungsqualität und/oder die Einstellung von Maschinenparametern und/oder der Gewichtung der Ziele macht, mit denen eine höhere Zielerreichung der Mehrzieloptimierung möglich ist. Durch die Abbildung der Interdependenzen zwischen den diversen Parametern in dem mehrdimensionalen Kennlinienfeld können diese kleinen Abweichungen einfach analysiert werden. Es ist daher vorzugsweise so, dass die Vorschläge des Fahrerassistenzsystems 8 von den Benutzervorgaben abweichen. Der Benutzer B kann die Vorschläge vorzugsweise annehmen oder ablehnen.

Es ist hier und vorzugsweise so, dass das mehrdimensionale Kennlinienfeld 11 mindestens eine zweidimensionale Kennlinie 20 und/oder mindestens eine mehrdimensionale Kennlinie 21 aufweist.

Vorzugsweise basiert mindestens ein Teil der Kennlinien 20, 21 auf gemessenen Zusammenhängen. Zusätzlich oder alternativ basiert zumindest ein Teil der Kennlinien 20, 21 auf theoretischen Zusammenhängen. Dabei kann auch eine einzelne Kennlinie 20, 21 Kombinationen aus gemessenen und theoretischen Zusammenhängen enthalten. Sofern das mehrdimensionale Kennlinienfeld 11 mehr als eine Kennlinie 20, 21 umfasst, sind diese entsprechend zur Bildung des mehrdimensionalen Kennlinienfelds 11 verknüpft. Diese Verknüpfung ist in Fig. 1 mittels der gestrichelten Linie zwischen der zweidimensionalen Kennlinie 20 und der mehrdimensionalen Kennlinie 21 angedeutet.

Es kann vorgesehen sein, dass mindestens ein Teil der Kennlinien 20, 21 auf Zusammenhängen beruht, die der Benutzer B an einem den aktuellen Ernteprozess betreffenden Ort in der Vergangenheit gemessen hat. Es ist dabei so, dass einige Gegebenheiten vor Ort, beispielsweise eine Topographie, ein Klima, etc. Einfluss auf die Grundlagen des mehrdimensionalen Kennlinienfelds 11 haben kann. Dieser Einfluss wird so berücksichtigt.

Hier und vorzugsweise passt das Fahrerassistenzsystem 8 das mehrdimensionale Kennlinienfeld 11 im laufenden Ernteprozess, insbesondere zyklisch, an den aktuellen Ernteprozesszustand an. Diese Möglichkeit wurde oben bereits angedeutet. Es handelt sich dabei ausdrücklich nicht um eine Regelung im eigentlichen Sinne. Vielmehr wird die Basis der Steuerung des Corncrackers 5 verändert. Bei einer Regelung wird versucht, den gewünschten Wert mittels Feedbacks zeitnah nachzukorrigieren. Vorliegend hingegen wird versucht, die Grundlage der Steuerung derart anzupassen, dass der gewünschte Wert korrekt eingestellt wird. Der so eingestellte Wert wird jedoch nicht nachgeregelt.

Hier und vorzugsweise weist das Fahrerassistenzsystem 8 mindestens ein Initialkennlinienfeld auf und nimmt bei der ersten Ermittlung des mindestens einen Ausgangsparameters die Ermittlung basierend auf dem Initialkennlinienfeld vor. Dieses Initialkennlinienfeld kann beispielsweise herstellerseitig hinterlegt sein.

Hier und vorzugsweise ist vorgesehen, dass das mehrdimensionale Kennlinienfeld 11 mindestens eine Beziehung zwischen einem den aktuellen Ernteprozesszustand abbildenden Kontrollparameter und mindestens einem der mindestens drei Parameter abbildet. Das Fahrerassistenzsystem 8 kann das mehrdimensionale Kennlinienfeld 11 auf Basis der Beziehung zwischen den Kontrollparametern und den mindestens drei Parametern an den aktuellen Ernteprozesszustand anpassen. Vorzugsweise speichert das Fahrerassistenzsystem 8 das angepasste mehrdimensionale Kennlinienfeld 11 zur Nutzung in späteren Ernteprozessen. Bei dem Kontrollparameter kann es sich um diverse Parameter handeln, die insbesondere zwar von den Eingangsparametern und den Ausgangsparametern abhängen, jedoch nicht direkt zur Steuerung des Corncrackers 5 herangezogen werden. Es kann dann versucht werden, den Kontrollparameter auf Basis des Optimierungsmodells 9 vorherzusagen und bei einer Abweichung des Ist-Werts des Kontrollparameters von der Vorhersage eine Anpassung des Optimierungsmodells 9 vorzunehmen.

Das Fahrerassistenzsystem 8 kann in der Steuerroutine während des Ernteprozesses bei einer Änderung, insbesondere einer vorgegebenen Abweichung, des Erntegutdurchsatzes und/oder der Motordrehzahl und/oder der Erntegutfeuchtigkeit und/oder der Häcksellänge aus dem Optimierungsmodell 9 und/oder zyklisch den Ausgangsparameter neu ermitteln und am Corncracker 5 einstellen.

Gemäß einer weiteren Lehre, der eigenständige Bedeutung zukommt, wird ein Verfahren zur Steuerung eines vorschlagsgemäßen Feldhäckslers 1 vorgeschlagen. Auf alle Ausführungen zu dem vorschlagsgemäßen Feldhäcksler 1 darf verwiesen werden. Bei diesem Verfahren ist es wesentlich, dass das Fahrerassistenzsystem 8 die Steuerroutine wie oben beschrieben durchführt.

### Bezugszeichenliste

- 1: Feldhäcksler
- 2: Arbeitsaggregat
- 3: Feldbestand
- 4: Erntegut
- 5: Corncracker
- 6: Walzen des Corncrackers
- 7: Spalt des Corncrackers
- 8: Fahrerassistenzsystem
- 9: Terminal
- 10: Optimierungsmodell
- 11: Kennlinienfeld
- 12: Vorpresswalzen
- 13: Motor
- 14: Vorsatzgerät
- 15: Häckseltrommel
- 16: Feuchtesensor
- 17: Durchsatzsensor
- 18: Grafik
- 19: Schieberegler
- 20: zweidimensionale Kennlinie
- 21: mehrdimensionale Kennlinie
- B: Benutzer

## Patentansprüche

1. Feldhäcksler zur Durchführung eines Ernteprozesses mit mindestens einem Arbeitsaggregat (2) zum Abernten eines Feldbestandes (3) und/oder zur Verarbeitung von Erntegut (4) des Feldbestandes (3) im Rahmen des Ernteprozesses, wobei das Erntegut (4) Kornbestandteile umfasst, wobei das mindestens eine Arbeitsaggregat (2) mit Maschinenparametern einstellbar ist,
wobei der Feldhäcksler (1) als Arbeitsaggregat (2) einen Corncracker (5) zum Aufbereiten der Kornbestandteile aufweist, der im Betrieb das Erntegut (4) zerkleinert, wobei der Corncracker (5) zwei Walzen (6) aufweist, die im Betrieb jeweils mit einer als Maschinenparameter einstellbaren Drehzahl rotieren, wobei zwischen den Walzen (6) ein Spalt (7) mit einer als Maschinenparameter einstellbaren Spaltbreite verbleibt, durch den das Erntegut (4) transportiert wird, und wobei die Walzen (6) eine als Maschinenparameter einstellbare Differenzdrehzahl aufweisen, um die sich die Drehzahl der Walzen (6) unterscheidet, wobei der Feldhäcksler (1) ein Fahrerassistenzsystem (8) zum Ansteuern von mindestens einem der Arbeitsaggregate (2) aufweist,
**dadurch gekennzeichnet,**
**dass** das Fahrerassistenzsystem (8) mindestens den Corncracker (5) in einer Steuerroutine steuert, indem das Fahrerassistenzsystem (8) die Maschinenparameter des Corncrackers (5) einstellt,
**dass** das Fahrerassistenzsystem (8) ein Optimierungsmodell (10) aufweist, dass das Optimierungsmodell (10) mindestens ein mehrdimensionales Kennlinienfeld (11) aufweist, das eine Beziehung zwischen einer Aufbereitungsqualität der Kornbestandteile und mindestens drei Parametern abbildet, die mindestens drei Parameter umfassend mindestens einen einen aktuellen Ernteprozesszustand abbildenden Eingangsparameter und mindestens einen Maschinenparameter des Corncrackers (5) als Ausgangsparameter,
**dass** der mindestens eine Eingangsparameter während des Ernteprozesses variiert und dass das Fahrerassistenzsystem (8) in der Steuerroutine während des Ernteprozesses auf Basis des variierenden Eingangsparameters aus dem Optimierungsmodell (10) den Ausgangsparameter ermittelt und am Corncracker (5) einstellt, um eine gleichmäßige, vorgegebene Aufbereitungsqualität der Kornbestandteile während des Ernteprozesses zu erreichen.

2. Feldhäcksler nach Anspruch 1, **dadurch gekennzeichnet, dass** die mindestens drei Parameter mindestens zwei, vorzugsweise mindestens drei, weiter vorzugsweise mindestens vier, einen aktuellen Ernteprozesszustand abbildende Eingangsparameter umfassen, und/oder, dass die mindestens drei Parameter mindestens zwei, vorzugsweise mindestens drei, Maschinenparameter als Ausgangsparameter umfassen.

3. Feldhäcksler nach Anspruch 1 oder 2, **dadurch gekennzeichnet, dass** der Feldhäcksler als Arbeitsaggregat (2) Vorpresswalzen (12) mit einer als Maschinenparameter einstellbaren Drehzahl aufweist, über die eine Häcksellänge des Ernteguts (4) einstellbar ist, und/oder, dass der Feldhäcksler (1) als Arbeitsaggregat (2) einen Motor (13) mit einer als Maschinenparameter einstellbaren Motordrehzahl zum Antreiben des Feldhäckslers (1) und zur Energieversorgung zumindest eines der weiteren Arbeitsaggregate (2) aufweist, und/oder, dass der Feldhäcksler (1) als Arbeitsaggregat (2) ein Vorsatzgerät (14) zum Aufnehmen des Feldbestandes (3) aufweist, und/oder, dass der Feldhäcksler (1) als Arbeitsaggregat (2) eine Häckseltrommel (15) zum Häckseln des Ernteguts (4) aufweist, und/oder, dass der Feldhäcksler (1) einen Feuchtesensor (16), insbesondere einen NIR-Sensor, zur Bestimmung einer Erntegutfeuchtigkeit aufweist, und/oder, dass der Feldhäcksler (1) einen Durchsatzsensor (17) zur Bestimmung eines Erntegutdurchsatzes aufweist.

4. Feldhäcksler nach einem der vorhergehenden Ansprüche, **dadurch gekennzeichnet, dass** die Eingangsparameter Erntegutparameter, insbesondere sensorisch erfasste Erntegutparameter, und/oder die Aufbereitungsqualität beeinflussende Maschinenparameter umfassen, vorzugsweise, dass die Eingangsparameter die Häcksellänge und/oder die Drehzahl der Vorpresswalzen (14) und/oder die Erntegutfeuchtigkeit und/oder die Motordrehzahl und/oder den Erntegutdurchsatz umfassen.

5. Feldhäcksler nach einem der vorhergehenden Ansprüche, **dadurch gekennzeichnet, dass** die Ausgangsparameter Maschinenparameter des Corncrackers (5) und/oder die Aufbereitungsqualität beeinflussende Maschinenparameter umfassen, vorzugsweise, dass die Ausgangsparameter die Spaltbreite des Corncrackers (5) und/oder die Differenzdrehzahl des Corncrackers (5) und/oder die Drehzahl des Corncrackers (5) umfassen.

6. Feldhäcksler nach einem der vorhergehenden Ansprüche, **dadurch gekennzeichnet, dass** der mindestens eine Eingangsparameter während des Ernteprozesses variiert und dass das Fahrerassistenzsystem (8) in der Steuerroutine während des Ernteprozesses auf Basis des variierenden Eingangsparameters aus dem Optimierungsmodell (10) den Ausgangsparameter ermittelt und einstellt, um eine konstante Aufbereitungsqualität der Kornbestandteile während des Ernteprozesses zu erreichen.

7. Feldhäcksler nach einem der vorhergehenden Ansprüche, **dadurch gekennzeichnet, dass** das mehrdimensionale Kennlinienfeld (11) eine Beziehung zwischen einer Fahrgeschwindigkeit des Feldhäckslers (1) und/oder zwischen einer Flächenleistung des Feldhäckslers (1) und/oder zwischen einem Energieverbrauch, insbesondere einem Kraftstoffverbrauch, des Feldhäckslers (1) und den mindestens drei Parametern abbildet.

8. Feldhäcksler nach Anspruch 7, **dadurch gekennzeichnet, dass** das Fahrerassistenzsystem (8) in der Steuerroutine eine Mehrzieloptimierung mit mehreren Zielen auf Basis des Optimierungsmodells (10) durchführt, dass in der Mehrzieloptimierung ein Ziel die vorgegebene Aufbereitungsqualität und ein Ziel ein minimaler Energieverbrauch und/oder eine maximale Fahrgeschwindigkeit und/oder eine maximale Flächenleistung ist und dass das Fahrerassistenzsystem (8) in der Steuerroutine während des Ernteprozesses auf Basis des variierenden Eingangsparameters den Ausgangsparameter auf Basis der Mehrzieloptimierung optimiert ermittelt.

9. Feldhäcksler nach Anspruch 8, **dadurch gekennzeichnet, dass** die Ziele der Mehrzieloptimierung gewichtet sind, dass die Gewichtung der Ziele, insbesondere der vorgegebenen Aufbereitungsqualität und/oder des minimalen Energieverbrauchs und/oder der maximalen Fahrgeschwindigkeit und/oder der maximalen Flächenleistung, von einem Benutzer (B) vorgebbar ist, vorzugsweise, dass der Benutzer (B) die Gewichtung zwischen der Aufbereitungsqualität und/oder dem minimalen Energieverbrauch und/oder der maximalen Fahrgeschwindigkeit und/oder der maximalen Flächenleistung an einer Grafik (18), insbesondere einem Schieberegler (19), einstellen kann und dass die Grafik (18) eine Konkurrenz zwischen der Aufbereitungsqualität und/oder dem minimalen Energieverbrauch und/oder der maximalen Fahrgeschwindigkeit und/oder der maximalen Flächenleistung visualisiert.

10. Feldhäcksler nach Anspruch 8 oder 9, **dadurch gekennzeichnet, dass** das Fahrerassistenzsystem (8) dem Benutzer (B) basierend auf der Mehrzieloptimierung Vorschläge für die vorgegebene Aufbereitungsqualität und/oder die Einstellung von Maschinenparametern und/oder der Gewichtung der Ziele macht, mit denen eine höhere Zielerreichung der Mehrzieloptimierung möglich ist, vorzugsweise, dass diese Vorschläge von den Benutzervorgaben abweichen.

11. Feldhäcksler nach einem der vorhergehenden Ansprüche, **dadurch gekennzeichnet, dass** das mehrdimensionale Kennlinienfeld (11) mindestens eine zweidimensionale Kennlinie (20) und/oder mindestens eine mehrdimensionale Kennlinie (21) aufweist, vorzugsweise, dass mindestens ein Teil der Kennlinien (20, 21) auf gemessenen Zusammenhängen basiert, und/oder, dass mindestens ein Teil der Kennlinien (20, 21) auf theoretischen Zusammenhängen basiert, vorzugsweise, dass mindestens ein Teil der Kennlinien (20, 21) auf Zusammenhängen beruht, die der Benutzer (B) an einem den aktuellen Ernteprozess betreffenden Ort in der Vergangenheit gemessen hat.

12. Feldhäcksler nach einem der vorhergehenden Ansprüche, **dadurch gekennzeichnet, dass** das Fahrerassistenzsystem (8) das mehrdimensionale Kennlinienfeld (11) im laufenden Ernteprozess, insbesondere zyklisch, an den aktuellen Ernteprozesszustand anpasst, vorzugsweise, dass das Fahrerassistenzsystem (8) mindestens ein Initialkennlinienfeld aufweist und dass bei der ersten Ermittlung des mindestens einen Ausgangsparameters das Fahrerassistenzsystem (8) die Ermittlung basierend auf dem Initialkennlinienfeld vornimmt.

13. Feldhäcksler nach Anspruch 12, **dadurch gekennzeichnet, dass** das mehrdimensionale Kennlinienfeld (11) mindestens eine Beziehung zwischen einem den aktuellen Ernteprozesszustand abbildenden Kontrollparameter und mindestens einem der mindestens drei Parameter abbildet, dass das Fahrerassistenzsystem (8) das mehrdimensionale Kennlinienfeld (11) auf Basis der Beziehung zwischen dem Kontrollparameter und den mindestens drei Parametern an den aktuellen Ernteprozesszustand anpasst, vorzugsweise, dass das Fahrerassistenzsystem (8) das angepasste mehrdimensionale Kennlinienfeld (11) zur Nutzung in späteren Ernteprozessen speichert.

14. Feldhäcksler nach einem der vorhergehenden Ansprüche, **dadurch gekennzeichnet, dass** das Fahrerassistenzsystem (8) in der Steuerroutine während des Ernteprozesses bei einer Änderung, insbesondere einer vorgegebenen Abweichung, des Erntegutdurchsatzes und/oder der Motordrehzahl und/oder der Erntegutfeuchtigkeit und/oder der Häcksellänge aus dem Optimierungsmodell (10) und/oder zyklisch den Ausgangsparameter neu ermittelt und am Corncracker (5) einstellt.

15. Verfahren zur Steuerung eines Feldhäckslers (1) nach einem der vorhergehenden Ansprüche, **dadurch gekennzeichnet, dass** das Fahrerassistenzsystem (8) die Steuerroutine durchführt.
